# EUROPEAN PATENT APPLICATION

(11) **EP 4 480 626 A2**
(43) Date of publication of application: **25.12.2024**
(21) Application number: 24173919.2
(22) Date of filing: 02.05.2024
(51) Int. Cl.: B23K 26/00, B23K 26/14, B23K 26/70

(54) **SYSTEMS AND METHODS FOR LASER CONTROL OF A LASER WELDER AND OPERATIONAL SETTINGS**

(30) Priority: 02.05.2023 US 202363499676 P; 01.05.2024 US 202418652136
(71) Applicant: Illinois Tool Works Inc., Glenview IL 60025 (US)
(72) Inventor: LIU, Shuang, Glenview, 60025 (US); HOLVERSON, Todd Earl, Glenview, 60025 (US); TYLER, Charles Ace, Glenview, 60025 (US); HUTCHISON, Richard Martin, Glenview, 60025 (US); MARCHAND, Andrew, Glenview, 60025 (US); CENTNER, Robert J., Glenview, 60025 (US); SCHNEIDER, Joseph C., Glenview, 60025 (US)
(74) Representative: HGF

(57) **Abstract**

Systems and methods for laser welding are disclosed. A laser welding system includes a hand held laser welding tool to direct laser power to a workpiece to generate a weld during a laser welding operation. The welding system includes a controller to regulate activation and regulation of the laser power based on user inputs, sensor inputs, and/or synergic control of a laser power system. A laser welding system is disclosed, comprising:

a laser source to generate laser power to perform a welding operation;
a handheld laser welding torch to direct the laser power to a workpiece; and
one or more shields to mitigate to fully or partially block or reflect laser light reflecting off of a work surface.

## Description

### CROSS REFERENCE TO RELATED APPLICATIONS

This application is a Non-Provisional Patent Application claiming priority to U.S. Provisional Patent Application No. 63/499,676 entitled "Systems And Methods For Laser Control Of A Laser Welder And Operational Settings" filed May 2, 2023, which is herein incorporated by reference in its entirety.

### BACKGROUND

Welding is a process that has historically been a cost effective joining method. Welding is, at its core, a way of bonding two pieces of parent material. Laser welding is a welding technique used to join multiple pieces of metal through the use of a laser. The laser beam provides a concentrated heat source, enabling a precise control of the heat input and high welding speed, creating a weld with low heat input, and a small heat affected zone. In various applications, filler metal may be needed for different purposes such as filling a gap between workpieces, reinforcing the joint, overlaying a substrate surface, building up an object, or acting as a buffering medium.

Conventional laser-based welding tools can create challenges for new users, especially for manually operated laser welders. Even welders with long experience with arc-related welding systems may be unfamiliar with the peculiarities of a laser welding system, including how to achieve a quality weld bead and incorporate laser protection features. Thus, systems and/or methods that facilitate and stabilize welding from laser based welding systems with laser protection features is desirable.

### SUMMARY

This disclosure relates generally to laser welding systems, methods, and apparatuses. More particularly, this disclosure relates to manually operated laser welding systems and torches, which may employ a continuously fed electrode wire for use in laser welding processes, substantially as illustrated by and described in connection with at least one of the figures, as set forth more completely in the claims.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 illustrates an example laser type welding system, in accordance with aspects of this disclosure.
FIGS. 2A, 2B, 2C and 2D illustrate example hand held laser welding tools, in accordance with aspects of this disclosure.

The figures are not necessarily to scale. Wherever appropriate, similar or identical reference numerals are used to refer to similar or identical components.

### DETAILED DESCRIPTION

Disclosed example systems and methods for laser welding are provided. In particular, disclosed example laser welding systems include a manually operated laser welding torch to direct laser power to a workpiece to generate a puddle during a laser welding operation. The welding system includes a controller to regulate activation and regulation of the laser power based on user inputs, sensor inputs, and/or synergic control of a laser power source.

As used herein, the word "exemplary" means serving as an example, instance, or illustration. The examples described herein are not limiting, but rather are exemplary only. It should be understood that the described examples are not necessarily to be construed as preferred or advantageous over other examples. Moreover, the term "examples" does not require that all examples of the disclosure include the discussed feature, advantage, or mode of operation.

As used herein, a wire-fed welding-type system refers to a system capable of performing welding (e.g., gas metal arc welding (GMAW), gas tungsten arc welding (GTAW), etc.), brazing, cladding, hardfacing, and/or other processes, in which a filler metal is provided by a wire that is fed to a location on the workpiece, such as an arc, a laser beam, or weld puddle.

As used herein, the term "welding-type operation" includes a welding operation employing a laser welding systems using laser energy, operable to fuse, bind, and/or cut one or more materials and/or layers of materials.

As used herein, a welding-type power source refers to any device capable of, when power is applied thereto, supplying welding, cladding, plasma cutting, induction heating, laser (including laser welding and laser cladding), carbon arc cutting or gouging and/or resistive preheating, including but not limited to transformer-rectifiers, inverters, converters, resonant power supplies, quasi-resonant power supplies, switch-mode power supplies, etc., as well as control circuitry and other ancillary circuitry associated therewith.

As used herein, laser beam scanning, laser beam scanning profile, laser scanning profile, or scanning profile, and/or wobble refers to one or more of control of the shape (e.g., common geometric shapes, a rectangle, a triangle, a loop, a circle, a zig-zag, V-shape, a U-shape, a figure-8, etc.), size (e.g., width and/or length), power distribution (e.g., bell curve, ramping up or down, favor one side over the other or center), scanning speed (e.g., over entire scan and/or over discrete portions of the scan), and/or pulse frequency (e.g., over entire scan and/or over discrete portions of the scan) of the laser power on the workpiece and/or the filler material, and any combination thereof.

For the purpose of promoting an understanding of the principles of the claimed technology and presenting its currently understood best mode of operation, reference will be now made to the examples illustrated in the drawings, and specific language will be used to describe the same. It will nevertheless be understood that no limitation of the scope of the claimed technology is thereby intended, with such alterations and further modifications in the illustrated device and such further applications of the principles of the claimed technology as illustrated therein being contemplated as would typically occur to one skilled in the art to which the claimed technology relates.

In disclosed examples, a laser welding system includes a laser source to generate laser power to perform a welding operation; a handheld laser welding torch to direct the laser power to a workpiece; and one or more shields to mitigate to fully or partially block or reflect laser light reflecting off of a work surface.

In some examples, the one or more shields comprises a laser reflection cover arranged about the tool to fully or partially block or reflect laser light from the workpiece.

In examples, the laser reflection cover is a semi-transparent disc or cone arranged about a welding tool gooseneck.

In examples, the laser reflection cover is configured to allow an operator to view the laser beam contact point on the workpiece, while reflecting, absorbing or deflecting a portion of the laser power away from the operator.

In some examples, the laser welding system further includes a fan configured to force air toward the protection laser lenses to direct gas or emissions away from the protection laser lenses.

In examples, the fan is a blower, air knife or nozzle to force the air toward the protection laser lenses.

In examples, the fan is configured to direct the air away from a weld bead.

In some disclosed examples, a laser welding system includes a laser source to generate a laser to perform a welding operation; a handheld laser welding torch to direct the laser to a workpiece; and one or more lenses to separate the laser into first and second beams, wherein the first bream and the second beam are directed to the workpiece at different angles.

In some examples, the first beam delivers a first portion of laser power of the laser, and the second beam delivers a second portion of laser power of the laser.

In examples, the first portion of the laser power is the same as the second portion of the laser power.

In some examples, the one or more lenses are configured to direct the first portion of the laser power and the second portion of the laser power to converge at a spot on the workpiece corresponding to a weld path or a weld bead.

In some examples, the laser welding system further includes first and second galvanometers to receive the first and second portions of the laser light.

In examples, the first and second galvanometers are configured to control scanning of the first and second portions of the laser light on the workpiece.

In examples, the laser welding system further includes a laser controller communicably coupled to the first and second galvanometers, the laser controller configured to transmit control signals corresponding to scanning of the laser light.

In examples, the laser welding system further includes a channel from a wire feeder to guide the wire toward the workpiece.

In examples, the channel guides the wire coaxially through a center of a laser welding nozzle.

In examples, the channel is oriented at an angle to orientation of the laser light.

In examples, the channel is mounted to the handheld laser welding torch.

In some disclosed examples, a robotic laser welding system includes a laser source to generate a laser to perform a welding operation; and one or more lenses to separate the laser into first and second beams, wherein the first bream and the second beam are directed to the workpiece at different angles.

In some examples, the collaborative robot (cobot).

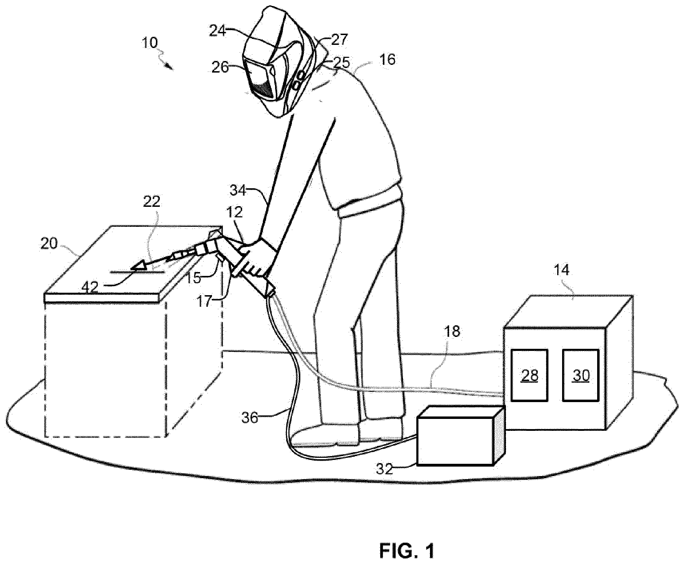

FIG. 1 is a schematic diagram of an example laser welding system 10. The example laser welding system 10 of FIG. 1 includes a laser welding power supply 14, a laser power source 28, a laser controller 30, and a wire feeder 32. A laser welding torch 12 is connected to the power supply 14 via power cable 18, and receives wire 36 from the wire feeder 32.

The laser source 28 generates welding-type laser power 42 (e.g., directed light energy) based on input power received from the power supply 14. The laser source 28 may be a light emitting a CO₂ laser, Nd:YAG laser, diode-type laser, fiber laser, disk laser or any other type of laser generator. As used herein, welding-type lasing power refers to laser power having wavelength(s) that are suitable for delivering energy to metal for welding, cutting, and/or cladding.

An operator 16 can wear one or more of a wearable 34 (such as a glove, a smartwatch, etc.) and/or a helmet 24. In some examples, the helmet 24 includes a screen 26, which may be configured to automatically dim when exposed to intense light, may be a filter for one or more wavelengths, and/or may be connected to another part of the system (e.g., controller 30). This allows the screen 26 to present information to the operator 16 to inform the welding process. In some examples, a helmet can include an auto-darkening filter (ADF). The filter may block and/or respond to specific wavelengths associated with laser welding, for instance, to darken the view screen. The filtering feature can also be applied to goggles and/or glasses.

In some examples, within the helmet, goggles, and/or glasses, a screen can be within view of the user, providing the view of a camera. This can be limited to the view from the camera, or may provide an augmented reality (AR) and/or virtual reality (VR) image.

The torch 12 focuses the laser power 42 at a joint or weld 22 on a workpiece 20. The laser power 42 heats the workpiece 20 to generate a puddle during welding operations. The wire feeder 32 feeds the wire 36 (e.g., filler wire, cladding material, metal additive) to the puddle generated by the laser power 42. The wire 36 melts into the puddle in the weld 22. The wire 36 may be fed from a wire supply, such as a wire reel or wire supply drum, and may be conveyed through a cable or other suitable conduit.

During a welding process, the laser controller 30 controls a focal point of the laser beam to wobble in multiple axes as applied to the workpiece 20. By moving the focal point in multiple directions, the laser can induce one or more beneficial effects in the weld. Examples of such beneficial effects that can be induced in the lateral direction(s) include agitating or stirring of the puddle laterally (including in patterns) to improve filler mixing, creating a heat gradient in the puddle in at least a partially lateral direction to induce movement and improve puddle wetting, and/or controlling the heating and/or cooling rates of the puddle in at least a partially lateral direction by controlling where heat is concentrated.

In some examples, movement of the focal point of the laser beam is controlled such that side-to-side motion is variable, random, and/or has multiple changing directions, angles, and/or lengths. For instance, side-to-side movement of the focal point may promote gap filling, wetting at the toes of a workpiece, etc., and may be set to a high wobble frequency (e.g., greater than 100 wobbles/movements per second). An additional, possibly independently controlled forward-backward motion at a lower wobble frequency could be used to result in a substantially rippled appearance, similar to a traditional ripple look of tungsten inert gas (TIG) welds, and/or other desirable characteristics.

The laser beam 42 can be controlled in any desired pattern, which may include, but is not limited to, a pattern with one or more straight lines and/or one or more curves. In some embodiments, the desired pattern may include a pause or break in the pattern, such as a time interval in which the focal point does not move. The desired pattern may include a circle, an ellipse, a zigzag, a figure 8, a transverse reciprocating line, a crescent, a triangle, a square, a rectangle, a non-linear pattern, an asymmetrical pattern, a pause, or any combination thereof. As may be appreciated, a pattern or a combination of patterns may be used and optimized for particular welds and/or welding positions. The movement of the focal point and the relative movement between the workpiece 20 and the laser torch 12 causes the focal point to trace a superimposed pattern over the workpiece 20. The example pattern may be traced by the laser beam 42 to agitate the puddle.

### Laser Welding System

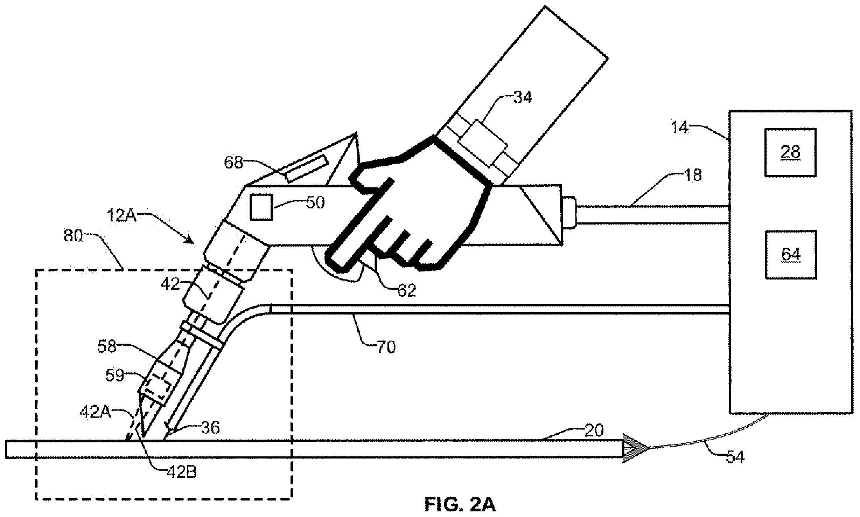

In some disclosed examples, a laser welding system may employ one or more lasers or laser beams to join multiple workpieces and/or create an object via additive manufacturing techniques. In some examples shown in FIG. 2A, a hand held laser tool 12A directs first and second laser beams 42A and 42B to converge at a location of the workpiece 20. This convergence point may correspond to the lasers intersecting, but may also result in the lasers scanning in one or more patterns, such as near, over and/or about welding wire 36. Although two laser beams 42A and 42B are shown, in some examples, three, four, five, six, seven, eight, nine, ten or more laser beams can be used.

In some examples, the laser beams 42A and 42B are from a single laser generator 28. The beam from laser generator 28 can be split by an optical device 59 (e.g., a filter, mirror, lens, etc.), and focused from two or more lenses and/or mirrors to converge at the workpiece 20. In some examples, the welding wire, or filler material, 36 advances to the workpiece 20 via a tube or channel 70 from a wire feeder. In some examples, the wire can be fed through the center of the nozzle 58 (e.g., coaxially), such that the laser beams 42A and 42B may contact the workpiece and/or the weld bead, without directly contacting the welding wire 36.

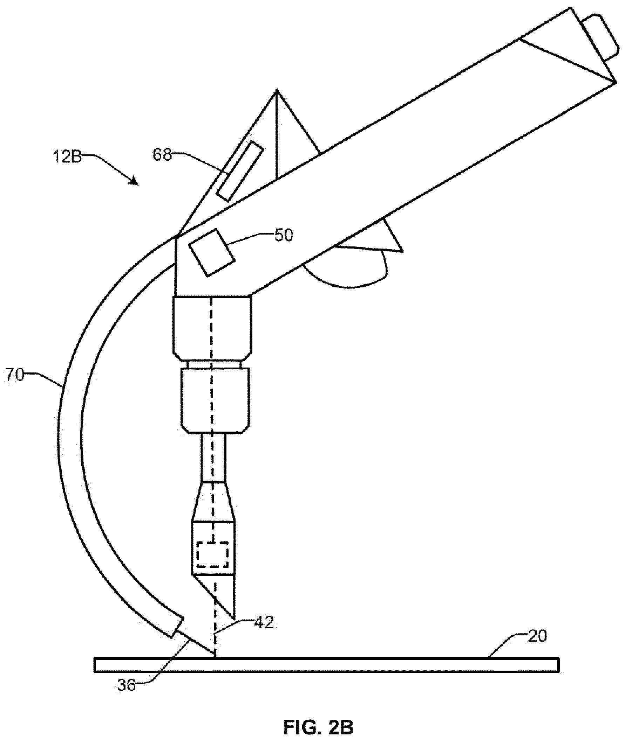

In some examples shown in FIG. 2B, a hand held laser tool 12B directs one or more laser beams 42 to contact the workpiece 20. The tube or channel 70 guides welding wire 36 to the workpiece 20 from one or more angles. As shown, the tube 70 can be external to the tool 12B, and can be attached, mounted, and/or integrated with the tool 12B. In some examples, the tube 70 can be configured such that the wire 36 contacts the workpiece 20 in a way that is assisting the operator with moving the torch along at a steady and consistent travel speed, such as shown in FIG. 2A.

By changing to a more vertical alignment or aligning the wire to be melted by the laser before contacting the workpiece, similar to the illustration of FIG. 2B, the operator is no longer assisted with maintaining travel speed, but gains more freedom of motion to manipulate the welding torch (e.g., changing travel speed or direction). For instance, the operator can push the torch in a desired direction, without being dragged by the force from the wire as it is fed from the wire feeder, achieving greater independence in welding complex joints.

In some examples, a physical guide is employed to ensure an appropriate distance and/or orientation is maintained relative to the workpiece. The guide may also provide an electrical connection with the power supply, indicating proximity between the welding torch and the workpiece, which may be monitored as an interlock or sequence step.

Although illustrated as the laser being provided from a center of the torch (e.g., via the nozzle 58) and the wire 36 provided at an angle (e.g., from an attached tube), in some examples the wire is provided from the center of the torch and the laser beam from an angle or attachment. Thus, in some examples, a conventional arc welding torch can be retrofit to use laser welding, whereas a laser welder can be retrofit to receive a wire.

In some examples, one or more laser welding parameters can be changed based on different angles at which the welding wire and/or the laser is directed to the workpiece.

Operation of the wire (e.g., wire feed speed, etc.) and/or laser (e.g., power, scanning pattern, etc.) can be coordinated by the control circuitry 30 (e.g., dynamically and automatically in response to one or more sensor measurements), and/or be controlled by a user interface (e.g., a trigger, button, pedal, etc.). As welders hold a hand held laser tool with their hands, automating changes (e.g., in laser welding parameters, as disclosed herein) and/or coordination between wire feeding and laser application may benefit users. If manual control is desired, a button, trigger, pedal or other device can be used to control the introduction of the welding wire to the weld bead. This can result in a dabbing action or reciprocating motion, with a burst of welding wire advancing quickly for a short amount of time, and/or turning wire feeding on or off during a welding operation.

### Guarding Systems and Methods

In some examples, a workpiece, a work environment, and/or an user can be guarded from the effects of laser power by a variety of device and/or techniques.

In some examples employing two or more laser beams, the angle at which each laser approaches the workpiece may be known and/or calculated. Thus, the spot(s) on the workpiece at which the two or more laser beams converge are calculated to correspond to the weld path or weld bead. Accordingly, each of the lasers has only a fraction of the full power to create the weld.

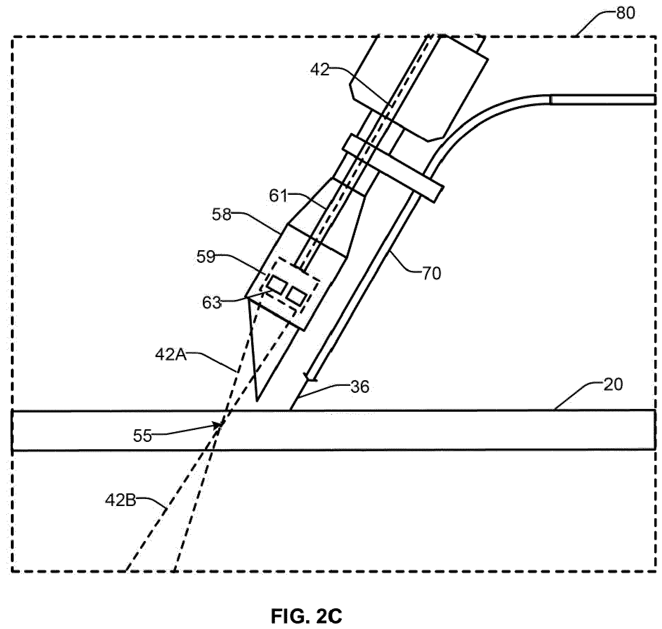

If the lasers diverge (e.g., as the laser beams burn through the workpiece and extend beyond), the power of any one laser is less powerful than that applied to the workpiece, as shown in FIG. 2B. In the detailed illustration within the box identified by reference numeral 80, shown in FIG. 2C, laser beam 42 is split at the optic 59 into two or more laser beams 42A and 42B. The two laser beams are directed to a surface of the workpiece 20 at different angles relative to the torch, the delivery angle of the wire 36, and/or the workpiece. The laser beams 42A and 42B are configured to converge at a point 55, where the power of each beam is combined to produce a maximum amount of heat energy.

In some examples, the laser light is directed to the lens 59 via a fiber 61. The lens 59 splits the laser light into first and second portions 42A and 42B. Each portion can be directed to one or more control optics 63, such as galvanometers, to control scanning and/or wobble of the laser light on the workpiece. The control optics 63 can be communicably connected to the laser controller, to receive instructions/commands to control the application of the laser light in accordance with a weld schedule or weld profile. In some examples, the control optics 63 are arranged within the nozzle 58 or a coupling and/or extension portion connected to the nozzle.

Although some examples illustrate as a single nozzle 58 delivering two laser beams 42A and 42B, in some examples two or more nozzles, and three or more laser beams, are used to direct the beams. The nozzles may be from a single laser torch (e.g., a handheld laser welding torch), and/or may provide laser beams from multiple torches (e.g., a robotic laser welding torch).

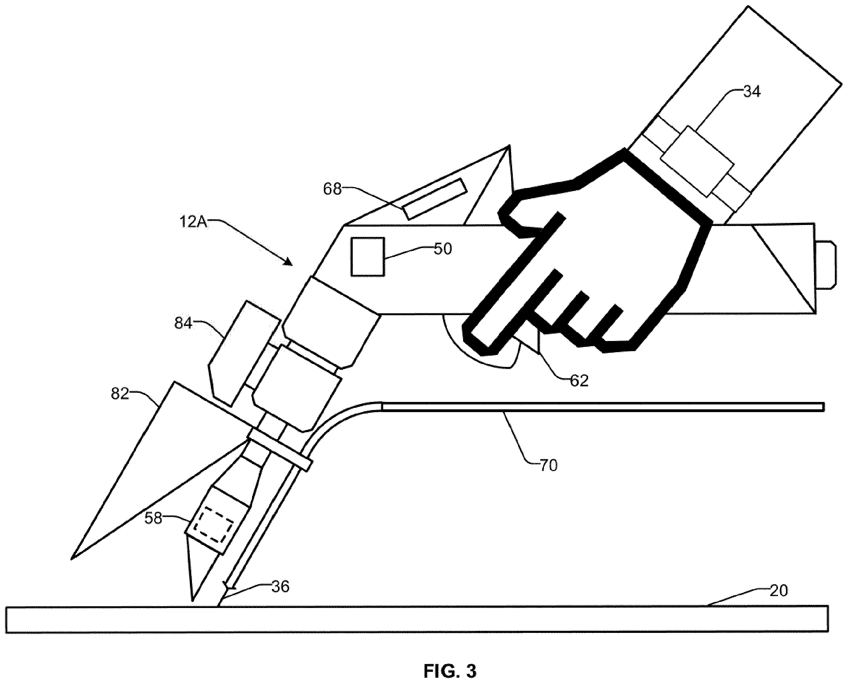

As shown in FIG. 3, a laser reflection cover 82 can be arranged on and/or about the tool to fully or partially block or reflect laser light reflecting from the workpiece. For example, the cover 82 can prevent a portion or all of the laser light from being directed toward the environment and/or the user. In an example, the cover 82 is made of a semi-transparent material in the shape of a disc or cone that is arranged about a welding tool gooseneck. The cover can allow the user to see the laser beam contact point on the workpiece, while mitigating the full power of the laser from reflecting toward the user.

In some examples, a blower, air knife or other type of fan device 84 may force air to direct gas or emissions generated though the welding process away from the cover and/or protection laser lenses.

In some examples, as a laser welding operation is set to commence, the laser welding system is configured to generate an alert and/or notice (e.g., audible, visual, haptic, etc.) at a predetermined amount of time and/or in response to one or more conditions (e.g., a change in orientation of the tool, a trigger pull, etc.).

In some examples, a helmet or other protective equipment can include one or more sensors (e.g., sensors 25 on the helmet, and/or sensors 50 on the laser welding torch) to sense the presence of a laser and/or laser intensity. If the sensor(s) indicates a laser is active or a characteristic associated with laser welding (e.g., heat, reflectance, etc.) exceeds a threshold value, the laser system can activate an interlock to prevent the power source and/or laser generator from operating.

Although some of the provided examples are directed to handheld laser welding, the systems and techniques disclosed herein may be applied to any number of laser welding systems, such as robotic welding systems and/or collaborative robot (cobot) welding systems.

### Weld operation

In some example, the wire can be oriented to advance to the workpiece at a substantially normal (e.g., vertical) angle relative to a surface of the workpiece.

In some examples, the angle at which the laser beam(s) impinge on the workpiece can be changed during a laser welding operation. For instance, the angle can change such that the laser beam crosses and melts the wire before contacting the workpiece.

In some examples, a filler material may be placed over and/or within a joint to be welded. The laser scan may apply additional power to the filler material, such that the filler material is melted or nearly melted as it makes contact with the already molten puddle.

A gap filling control feature can include a user interface to receive a control input (e.g., user interface and/or foot pedal), with changes associated with such control being synergistically adjusting one or more other laser welding parameters (e.g. lower or higher power, slower or faster weld speed).

In disclosed examples, control of the laser scanning, which correlates to the laser power applied to the weld, can be adjusted for particular characteristics. A thin gauge material can be welded with or without a filler wire. If no filler wire is employed (e.g., as multiple overlapping plates are being welded, such as a lap weld), laser power can be applied at higher power at edges of the overlap. In some examples, the laser scans across a centerline corresponding to the weld (e.g., a center of the overlap) and/or the direction of travel, such that the center is subject to laser power at a greater frequency than the edges. Thus, one example provides for a higher power at one or more edges, and relatively less power as the laser scans the center. This outcome can result from a change in pulse rate (e.g., at the edges versus the center), a speed with which the laser scans the weld (e.g., lateral and/or forward/backward movement at a faster rate in the center and lingering at the edges), and/or changes in the pattern of laser application (e.g., a U-shape, a figure-8, etc.), as a list of non-limiting examples. An example laser beam profile may resemble a bell curve, with an apex of the curve crossing the center of the weld. The term laser scanning profile can be a shape with a fixed geometry (U, 8, etc.) for the laser wobble. This may also include power level, which may be consistent, bell curve, ramping up or down, pulsing, and/or combination of these features.

The above laser parameter control techniques can be applied to a weld with or without a filler material (e.g., adding a welding wire). For instance, the laser power can be applied at low power or wattage, such that the laser power penetrates the top plate yet does not penetrate through the bottom plate (of a lap weld), yet the laser wobble is controlled to heat the material(s) at edges/sides of the overlap. The laser power may or may not be applied with greater power/time/pulse frequency at the edges.

In examples where two materials being welded have different characteristics, application of the laser power can be controlled to apply a first laser power or scan on the first material and a second laser power or scan on the second material. For instance, when the first material is thicker than the second material, the laser power can be greater at the edge of the weld at the first material and/or overlapping portion, whereas the laser power can be reduced at the edge of the weld at the second material. Suitable laser parameters can include those described herein.

In some such examples, the amount of power applied to the first material may be greater than 50% (e.g., up to 99%), whereas the amount of power applied to the second mater may be less than 50% (e.g., down to 1%).

In some examples, the when and where the laser power is applied to the weld can control the quality of the weld. For instance, in a brazing operation, the laser can be focused on the filler material first, then shifted to the workpiece. As the filler material may have a different melting point than the workpiece, the laser power applied to the filler material may have lower power (e.g., lower pulse rate, faster scanning speed, etc.) than the workpiece.

In some examples, the laser power may be applied to the workpiece first to heat the workpiece prior to contact from the filler material. The workpiece may reach a temperature at which the filler material melts, but may be below the melting point of the workpiece itself. Once applied to the workpiece, additional laser power may be added to the resulting weld bead. The laser can be scanned over both the workpiece and the filler material (e.g., weld bead) to continue fusing of the workpiece (and/or buildup of an additive manufactured object via the filler material).

In some examples, the hand held laser welding tool may be used to build an object by additive manufacturing techniques. For instance, predetermined sets of laser welding parameters can be adjusted over time (e.g., during a laser welding operation, in response to historical data), and applied to control and/or optimize changes in a laser power as the laser is applied to various surfaces of the object. For instance, as additive manufacturing progresses, characteristics of the object change, such as temperature, size, smoothness, etc. The laser welding tool can monitor changes in the object characteristics and adjust application of the laser accordingly (e.g., laser power, scanning pattern, etc.). Changes may additionally or alternatively be controlled by a user input (via a user interface, as disclosed herein). This allows for fine and dynamic control of the additive manufacturing process.

### Operational settings

In some examples, the laser welding system is configured to control an adjustable bead width. For instance, if the filler material is spread more widely on the surface(s) of the workpiece, application of the laser power can be adjusted to optimize the welding process. This may include changes to the laser pattern, the pulse frequency, and/or the travel speed, as a list of non-limiting examples. In some examples, two or more laser power changes can be implemented simultaneously, such as increasing laser power (e.g., increasing pulse frequency) while changing the scanning speed, as but one example. A wider weld bead may result in less penetration.

In some examples, the laser welding system is configured to adjust laser power parameters to improve crater settings for a hand held laser welding torch. For instance, during a laser welding operation, if wire is not removed from the weld bead prior to removal of heat (e.g., before the laser is turned off), the wire may stick. Continuing to provide high laser power can result in burn through or blowhole at the weld bead. This can cause catering at the end of the weld, which may damage the workpiece and result in a low quality weld.

In some disclosed examples, how the weld is to finish (e.g., period of time, length of weld, change in geometry, etc.) is determined. At that point in the welding operation, the laser power can be adjusted down even as the welding wire continues to advance, but at a slower rate or may stop altogether. For instance, the laser power level is lowered (e.g., abruptly or gradually), providing power sufficient to allow the welding wire to break free of the weld bead, but not so much power to create a crater at the end of the weld. The laser power sequence could entail adjustment to wobble settings at the end of the weld to release the welding wire.

As utilized herein the terms "circuits" and "circuitry" refer to physical electronic components (i.e. hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z". As utilized herein, the term "exemplary" means serving as a non-limiting example, instance, or illustration. As utilized herein, the terms "e.g.," and "for example" set off lists of one or more non-limiting examples, instances, or illustrations.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. For example, systems, blocks, and/or other components of disclosed examples may be combined, divided, re-arranged, and/or otherwise modified. Therefore, the present method and/or system are not limited to the particular implementations disclosed. Instead, the present method and/or system will include all implementations falling within the scope of the appended claims, both literally and under the doctrine of equivalents. Certain embodiments of the invention are described in the following clauses:
Clause 1. A laser welding system, comprising:
   a laser source to generate laser power to perform a welding operation;
   a handheld laser welding torch to direct the laser power to a workpiece; and
   one or more shields to mitigate to fully or partially block or reflect laser light reflecting off of a work surface.
Clause 2. The laser welding system of clause 1, wherein the one or more shields comprises a laser reflection cover arranged about the tool to fully or partially block or reflect laser light from the workpiece.
Clause 3. The laser welding system of clause 2, wherein the laser reflection cover is a semi-transparent disc or cone arranged about a welding tool gooseneck.
Clause 4. The laser welding system of clause 2, wherein the laser reflection cover is configured to allow an operator to view the laser beam contact point on the workpiece, while reflecting, absorbing or deflecting a portion of the laser power away from the operator.
Clause 5. The laser welding system of clause 1, further comprising a fan configured to force air toward the protection laser lenses to direct gas or emissions away from the protection laser lenses.
Clause 6. The laser welding system of clause 5, wherein the fan is a blower, air knife or nozzle to force the air toward the protection laser lenses.
Clause 7. The laser welding system of clause 5, wherein the fan is configured to direct the air away from a weld bead.
Clause 8. A laser welding system, comprising:
   a laser source to generate a laser to perform a welding operation;
   a handheld laser welding torch to direct the laser to a workpiece; and
   one or more lenses to separate the laser into first and second beams, wherein the first bream and the second beam are directed to the workpiece at different angles.
Clause 9. The laser welding system of clause 8, wherein the first beam delivers a first portion of laser power of the laser, and the second beam delivers a second portion of laser power of the laser.
Clause 10. The laser welding system of clause 9, wherein the first portion of the laser power is the same as the second portion of the laser power.
Clause 11. The laser welding system of clause 8, wherein the one or more lenses are configured to direct the first portion of the laser power and the second portion of the laser power to converge at a spot on the workpiece corresponding to a weld path or a weld bead.
Clause 12. The laser welding system of clause 8, further comprising first and second galvanometers to receive the first and second portions of the laser light.
Clause 13. The laser welding system of clause 12, wherein the first and second galvanometers are configured to control scanning of the first and second portions of the laser light on the workpiece.
Clause 14. The laser welding system of clause 13, further comprising a laser controller communicably coupled to the first and second galvanometers, the laser controller configured to transmit control signals corresponding to scanning of the laser light.
Clause 15. The laser welding system of clause 8, further comprising a channel from a wire feeder to guide the wire toward the workpiece.
Clause 16. The laser welding system of clause 15, wherein the channel guides the wire coaxially through a center of a laser welding nozzle.
Clause 17. The laser welding system of clause 15, wherein the channel is oriented at an angle to orientation of the laser light.
Clause 18. The laser welding system of clause 15, wherein the channel is mounted to the handheld laser welding torch.
Clause 19. A robotic laser welding system, comprising:
   a laser source to generate a laser to perform a welding operation; and
   one or more lenses to separate the laser into first and second beams, wherein the first bream and the second beam are directed to the workpiece at different angles.
Clause 20. The robotic laser welding system of clause 19, wherein the collaborative robot (cobot).

## Claims

1. A laser welding system, comprising:
a laser source to generate laser power to perform a welding operation;
a handheld laser welding torch to direct the laser power to a workpiece; and
one or more shields to mitigate to fully or partially block or reflect laser light reflecting off of a work surface.

2. The laser welding system of claim 1, wherein the one or more shields comprises a laser reflection cover arranged about the tool to fully or partially block or reflect laser light from the workpiece.

3. The laser welding system of claim 2, wherein the laser reflection cover is a semi-transparent disc or cone arranged about a welding tool gooseneck, or wherein the laser reflection cover is configured to allow an operator to view the laser beam contact point on the workpiece, while reflecting, absorbing or deflecting a portion of the laser power away from the operator.

4. The laser welding system of claim 1, further comprising a fan configured to force air toward the protection laser lenses to direct gas or emissions away from the protection laser lenses.

5. The laser welding system of claim 4, wherein the fan is a blower, air knife or nozzle to force the air toward the protection laser lenses, or wherein the fan is configured to direct the air away from a weld bead.

6. A laser welding system, comprising:
a laser source to generate a laser to perform a welding operation;
a handheld laser welding torch to direct the laser to a workpiece; and
one or more lenses to separate the laser into first and second beams, wherein the first bream and the second beam are directed to the workpiece at different angles.

7. The laser welding system of claim 6, wherein the first beam delivers a first portion of laser power of the laser, and the second beam delivers a second portion of laser power of the laser, and optionally wherein the first portion of the laser power is the same as the second portion of the laser power.

8. The laser welding system of claim 6, wherein the one or more lenses are configured to direct the first portion of the laser power and the second portion of the laser power to converge at a spot on the workpiece corresponding to a weld path or a weld bead.

9. The laser welding system of claim 6, further comprising first and second galvanometers to receive the first and second portions of the laser light.

10. The laser welding system of claim 9, wherein the first and second galvanometers are configured to control scanning of the first and second portions of the laser light on the workpiece, and optionally further comprising a laser controller communicably coupled to the first and second galvanometers, the laser controller configured to transmit control signals corresponding to scanning of the laser light.

11. The laser welding system of claim 6, further comprising a channel from a wire feeder to guide the wire toward the workpiece.

12. The laser welding system of claim 11, wherein the channel guides the wire coaxially through a center of a laser welding nozzle.

13. The laser welding system of claim 11, wherein the channel is oriented at an angle to orientation of the laser light, or wherein the channel is mounted to the handheld laser welding torch.

14. A robotic laser welding system, comprising:
a laser source to generate a laser to perform a welding operation; and
one or more lenses to separate the laser into first and second beams, wherein the first bream and the second beam are directed to the workpiece at different angles.

15. The robotic laser welding system of claim 14, wherein the robotic laser welding system is a collaborative robot (cobot).
